# EUROPÄISCHE PATENTSCHRIFT

(11) **EP 3 079 140 B1**
(45) Veröffentlichungstag und Bekanntmachung des Hinweises auf die Patenterteilung: **24.10.2018**
(21) Anmeldenummer: 16163040.5
(22) Anmeldetag: 30.03.2016
(51) Int. Cl.: G09F 7/18, A47G 1/00, F16B 1/00

(54) **AUSTAUSCHBARE SCHILDANORDNUNG MIT DOPPELLAGE**
REPLACEABLE SIGN ASSEMBLY WITH DOUBLE LAYER
DISPOSITIF D'ECRAN ECHANGEABLE A DOUBLE COUCHE

(30) Priorität: 31.03.2015 DE 102015104984; 12.05.2015 DE 102015107418
(43) Veröffentlichungstag der Anmeldung: 12.10.2016
(73) Patentinhaber: XYLO-Wolf GmbH, 85521 Ottobrunn (DE)
(72) Erfinder: ILGAUDS, Ralf, 83620 Feldkirchen-Westerham (DE)
(74) Vertreter: Leonhard, Frank Reimund

(56) Entgegenhaltungen:
- WO-A1-99/51130
- US-A1- 2007 157 835
- US-B1- 6 405 983

## Beschreibung

Die Erfindung betrifft ein kennzeichnendes Schild zur Anbringung an einen Untergrund, dessen Informationsträger ohne die Notwendigkeit von Werkzeug ausgetauscht werden kann.

Außerdem befasst sich die Erfindung mit Sockeln für eine Schildanordnung. Des Weiteren betrifft die Erfindung die Verwendung einer Plattenanordnung für die Anbringung an einem vertikalen Untergrund.

Aus dem Stand der Technik sind magnetisch befestigte Namenschilder bekannt, vgl.

DE 20 2009 005 948 U1**.** Dort kann ein beschriftetes Datenblatt, beispielsweise Papier, in einen Grundkörper eingelegt werden, der einen umlaufenden Rahmen mit auskragenden Nasen aufweist, wodurch das Datenblatt positioniert wird. Eine rückseitig eingebrachte Platte wird in die Vertiefung des Grundkörpers eingelegt und über die Nasen fixiert, wodurch das Datenblatt eingespannt wird. Ein wesentliches Merkmal ist, dass die Fläche, an der das Namenschild befestigt werden soll, zwischen den Magneten und einer an der Rückseite des Schildes liegenden magnetisierbaren Platte liegt. Deshalb muss die Fläche ausreichend dünn und flexibel sein, beispielsweise Kleidungsstücke (vgl. [0010]), um eine Befestigung zu gewährleisten.

Auch schlägt der Stand der Technik, beispielsweise in DE 20 2011 106 151 U1**,** Magnettafeln vor, die über ein magnetisches System lösbar mit einer Wand verbunden werden können. Dabei umfasst die Tafel zwei Schichten, wovon eine Schicht magnetisierbar ist und die zweite Schicht aus Glas oder dergleichen besteht (vgl. [0012]). Auf die nicht magnetisierbare Tafeloberfläche können wiederum Magnete zur Befestigung von Notizzettel, Postkarten und dergleichen (vgl. [0012]) angebracht werden, wobei eine Kraft zwischen der ersten magnetisierbaren Schicht und dem aufgebrachten Magneten wirkt. Die zweite Oberfläche ist beschreibbar, beispielsweise mit einem fluoreszierenden Kreidemarker (vgl. [0012]). Das Einbringen eines beschrifteten Trägers ist nicht vorgesehen.

Aus WO 99/51130 A1 ist ein Schnellmontage-Rahmen bekannt, in den Bilder eingesetzt werden können. Der Rahmen weist eine Rückenstück, eine transparente Fläche und ein Rahmengegenstück sowie Befestigungsmittel auf. Die Befestigungsmittel sind so ausgestaltet, dass die übrigen Komponenten in Verbindung zu halten und den Rahmen selbst zu bilden. Die Befestigungsmittel sind ausgestaltet, die transparente Fläche und/oder das Rahmengegenstück gegenüber dem Rückenstück direkt über den Frontabschnitt des Rahmens zu sichern oder zu freizugeben. Ist das Rückenstück aus einem metallischen Material, kann eine Stützvorrichtung eine Stütze umfassen, die als Magnet ausgebildet ist.

In US 6,405,983 B1 ist eine Vorrichtung zum Anbringen beispielsweise eines Posters an einer Wand beschrieben. Die Vorrichtung umfasst eine hintere Platte, die an der Wand befestigt werden kann, und einen Knauf an der vorderen Seite der Platte, über den das Poster geschoben und gehalten werden kann, indem der Knauf in eine Loch in dem Poster greift.

US 2007/0157835 A1 offenbart die Verbindung einer Druckplatte mit einer Trägerplatte. Die Druckplatte umfasst einen bedruckbaren Plattenkörper und einen Befestigungskanal, der sich durch den bedruckbaren Plattenkörper erstreckt. Die Trägerplatte wird zum Befestigen der Druckplatte während eines Druckprozesses verwendet.

Die Erfindung hat es sich demnach zur Aufgabe gemacht eine Schildanordnung bereitzustellen, die an einem festen Untergrund befestigt werden kann und dessen Teil der Anordnung, der die Information trägt, ohne Hilfsmittel oder Werkzeuge von der Halterung entfernt werden kann, um einen einfachen Austausch eines Informationsträgers zu gewährleisten, der in einem Schildelement angeordnet ist. Zusätzlich werden aufwendige Konstruktive Merkmale vermieden, ohne dabei den ästhetischen Aspekt zu vernachlässigen.

Dazu schlägt die Erfindung Lösungen der Ansprüche 1 oder 7 vor. Die Lösungen erlauben es eine Schildanordnung an einem festen Untergrund, beispielsweise einer Wand, zu befestigen, und zwar so, dass ein Teil der Anordnung, der den Informationsträger umfasst, ohne Hilfsmittel oder Werkzeug von der Halterung entfernbar ist und ein einfaches Austauschen des Informationsträgers ermöglicht. Dabei kann ein auszuwechselnder Informationsträger positionsgenau eingebracht werden, so dass er während der Anbringung an die Halterung diese Position behält, ohne dafür ein umlaufendes Rahmenelement zu benötigen und ohne die Ästhetik der Anordnung negativ zu beeinflussen.

Die Schildanordnung umfasst ein Schildelement, das aus zwei Platten besteht, wobei eine der Platten rückseitig mit einer Magnetanordnung ausgestattet ist, die über ein Zwischenstück mit der Platte verbunden ist. Die zweite Platte besitzt eine Aussparung, dessen Grundform zu der Grundform des Zwischenstücks komplementär ist, so dass bei einem flächigen aufeinanderlegen das Zwischenstück die Aussparung der zweiten Platte ausfüllt. Die weiter rückwärtig abstehende Magnetanordnung kann in eine Haltevorrichtung eingebracht werden. Die Haltevorrichtung umfasst eine weitere Platte und rückwärtig liegend ein ferromagnetisches Plattenstück. Die weitere Platte umfasst eine Aussparung, die in ihrer Grundform wiederum komplementär zu der Grundform der Magnetanordnung ist. Eine Kraft wirkt zwischen der ferromagnetischen Platte und der Magnetanordnung, wodurch die komplette Anordnung zusammengehalten wird (Anspruch 1).

Zwischen die Platten des Schildelements kann ein Informationsträger eingelegt werden, der bevorzugt eine flächige Aussparung aufweist, die in ihrer Grundform komplementär zu der Grundform des Zwischenstücks ist (Anspruch 2).

Durch die Anordnung sind die beiden Platten des Schildelements rahmenlos miteinander verbunden und können bei Eingreifen des Zwischenstücks in die Aussparung der zweiten Platte nicht gegeneinander verdreht werden (Anspruch 3).

Die Haltevorrichtung der Schildanordnung kann mit einem festen Untergrund verbunden werden. Dazu wird entweder die dritte Platte zur Aufnahme der Magnetanordnung über das ferromagnetische Plattenstück an dem Untergrund befestigt oder das Plattenstück, das mit der dritten Platte verbunden ist, wird auf den Untergrund angebracht. Insbesondere handelt es sich bei dem Untergrund um eine Wand.

Die Magnetanordnung oder das magnetische Befestigungselement weist einen unrunden Permanentmagneten oder zumindest zwei beabstandete runde Permanentmagnete auf (Anspruch 4).

Die Grundform des Zwischenstücks ist unrund und dabei bevorzugt rechteckig, polygonisch oder elliptisch, besonders bevorzugt ist eine Achterform als zwei teilweise ineinander liegende Kreise (Anspruch 5).

Mit der Erfindung verwendete Platten des Schildelements bestehen aus einem durchsichtigen Material, insbesondere bestehen sie aus Glas. Die erste, vordere Platte kann teilweise opak ausgestaltet sein, wobei jeweils der Abschnitt durchsichtig ist, an dessen hinterer Fläche das Zwischenstück mit der Magnetanordnung angebracht ist, um dieses in der Frontansicht zu verdecken (Anspruch 6).

Eine abschnittsweise durchsichtige Plattenanordnung oder Schildelement kann zur Anbringung in eine Haltevorrichtung verwendet werden, wobei das rückwärts abstehende Magnetsystem in die Aussparungen der dritten Platte der Haltevorrichtung greift und dadurch das Schildelement durch einen innenliegenden Rahmen (die komplementären Grundformen der Aussparung der zweiten Platte des Schildelements und des Zwischenstücks rückwärtig an der ersten Platte des Schildelements) gegen eine Verdrehung relativ zueinander geschützt wird.

Eine Doppellagen-Schildanordnung wird als ein Beispeil außerhalb der Erfindung vorgeschlagen, die einen Sockel oder Haltevorrichtung und eine doppellagige Schildfläche umfasst, wobei die Schildfläche über alle Ränder des Sockels oder der Haltevorrichtung hervorsteht und den Sockel in Frontansicht verdeckt. Die doppellagige Schildfläche besteht dabei aus zwei parallelen Platten und ein Magnethalter ist an einer rückseitigen Fläche der vorderen Platte über eine erhabene Formfläche oder über ein Zwischenstück angebracht. Beim Zusammensetzen der beiden Platten der Schildfläche greift die erhabene Formfläche in eine unrunde Formöffnung der hinteren Platte, wobei die Randkonturen der Formöffnung und der Formfläche gleich sind. Die Dicke der Formfläche ist dabei so ausgebildet, dass sie ein Stück weit in die Formöffnung greift, um eine Unverdrehbarkeit zu erreichen, dabei entspricht die Dicke insbesondere der Dicke der hinteren Platte der Schildfläche.

Im montierten Zustand der Schildanordnung greifen die Magnethalter durch eine Durchgriffsöffnung oder Aussparung des Sockels, um eine Kraft zwischen den Magnethaltern und einer magnetisch wirksamen Bodenplatte oder ferromagnetischen Platte wirken zu lassen.

Die Magnethalter können dabei als zwei beabstandete, getrennte Magnete ausgebildet sein, so dass diese durch zwei beabstandete, getrennte Durchgriffsöffnungen des Sockels greifen und mit der magnetisch wirksamen Bodenplatte fixiert werden können, jedoch ohne Hilfsmittel oder ohne Werkzeug wieder entfernbar sind.

Doppellagen der Schildanordnung können mit der Erfindung aus zwei ebenen Glasplatten bestehen, wovon ein oberer Abschnitt der vorderen Platte opak ist und ein unterer Abschnitt der vorderen Platte lichtdurchlässig ist (Anspruch 7). Der untere lichtdurchlässige Abschnitt der vorderen Platte weist eine größere Höhe als die Hälfte der Plattengesamthöhe auf und verdeckt bei frontaler Ansicht Montagestellen und Montageöffnungen (Anspruch 8).

Die erhabene Formfläche weist eine unrunde Formfläche, speziell in Form einer liegenden Acht oder einer senkrecht stehenden Acht auf und auf den ausgewölbten Abschnitten der Acht ist je ein Magnet angeordnet (Anspruch 9).

Auf der Oberfläche des Sockels können Dämpfungsstücke angebracht sein, die elastisch und nachgiebig sind, um beim Anbringen des Schildelements dessen Oberfläche zu schützen und eventuelle fertigungsbedingte Unebenheiten und Toleranzen auszugleichen (Anspruch 10). Mindestens im unteren Bereich, außerhalb des Montagesockels, kann eine beschriftete Zwischenlage oder ein beschrifteter Informationsträger zwischen den beiden Platten der Schildanordnung angebracht sein, wobei die Zwischenlage speziell zwischen den Plattenflächen aufgenommen wird, insbesondere von den Platten eingepresst wird. Die Zwischenlage kann aus Papier, Pergament oder einem ähnlichen beschriftbaren Material bestehen (Anspruch 11). Dadurch kann ein Informationsträger oder eine Zwischenlage in einem Schild angebracht sein, ohne einen Rahmen zur Positionierung zu benötigen, die Schildanordnung ist dementsprechend rahmenlos ausgebildet (Anspruch 12). Die Dicke der Zwischenlage ist dabei bevorzugt mindestens um den Faktor 10 dünner als die Dicke der vorderen oder hinteren Platte.

Die Ausführungsformen der Erfindung sind anhand von einem Beispiel dargestellt und nicht auf eine Weise, in der Beschränkungen aus den Figuren in die Patentansprüche übertragen oder hineingelesen werden. Gleiche Bezugszeichen in den Figuren geben gleiche Elemente an.
- Figur 1: ist eine Seitenansicht einer zusammengesetzten und an einem festen Untergrund montierten Schildanordnung, umfassend ein Schildelement 1 und eine Haltevorrichtung 2.
- Figur 2: zeigt eine Explosionsdarstellung in einer Seitenansicht der Schildanordnung mit den Baugruppen der Haltevorrichtung oder des Sockels und des Schildelements oder des Doppellagen-Schilds.
- Figur 3: ist in einer Rückseitenansicht die erste Platte 1a des Schildelements.
- Figur 4: ist in einer Rückseitenansicht die zweite Platte 1b des Schildelements.
- Figur 5: ist in einer Vorderansicht der Informationsträger oder die Zwischenlage 60.
- Figur 6: stellt in einer Vorderansicht die dritte Platte oder den Sockel 5 dar.

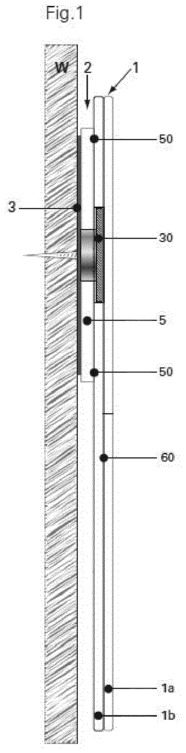

Figur 1 veranschaulicht ein Ausführungsbeispiel der Schildanordnung im montierten Zustand an einem festen Untergrund W. Dabei liegen die beiden Schildelemente 1a und 1b flächig aneinander und das Zwischenstück 30, befestigt auf der ersten Platte 1a, greift in die Aussparung 40 der zweiten Platte. Die Randkontur der Grundform 30a des Zwischenstücks 30 entspricht im Wesentlichen der Randkontur der Grundform 40a der Aussparung der zweiten Platte 1b. Für eine deutliche Darstellung sind in Figur 1 Konturen des Zwischenstücks 30 und des magnetischen Befestigungselements 12 sichtbar dargestellt, gleichwohl ist die Kontur des magnetischen Befestigungselements 12 in bevorzugten Ausführungsformen aus einer Seitenansicht nicht sichtbar und die Kontur des Zwischenstücks 30 ist in solchen Ausführungsformen aus einer Seitenansicht sichtbar, in denen die zweite Platte 1b aus einem durchsichtigen Material besteht.

Die wesentliche Entsprechung bezieht sich dabei darauf, dass die Randkonturen der komplementären Grundformen identisch sind, wobei die erhabene Form, hier das Zwischenstück 30 mit der Grundform 30a, eine etwas kleinere Fläche oder einen etwas kleineren Umfang aufweist als die Aussparung, hier die Aussparung 40 mit der Grundform 40a, um ein Einstecken der erhabenen Struktur in die Aussparung zu ermöglichen. Zu erwartende Fertigungstoleranzen müssen durch diesen Größenunterschied kompensiert werden und ein Anwender muss in der Lage sein die erste Platte 1a problemlos ohne ein Verkanten in die Aussparung 40 einbringen zu können. Gleichwohl darf der Größenunterschied die Funktion der komplementären Grundformen nicht beeinträchtigen. Die Funktion liegt in der Verhinderung einer Verdrehung um die z-Achse, die Platten sollen formschlüssig gehalten werden, damit ein Betrachter von einem korrekt montierten Schild ausgeht und nicht den Eindruck gewinnt, dass das Schildelement falsch oder schlecht montiert ist. Dies ist der Fall, wenn die parallelen Platten 1a und 1b um die z-Achse so zueinander verdreht sind, dass die zweite Platte 1b bei frontaler Sicht in einem der Eckbereiche deutlich erkennbar ist und nicht von der Platte 1a verdeckt wird. Eine gewisse Toleranz ist bei einer solchen Verdrehung in Kauf zu nehmen, in einem Maße, dass kein negativer Eindruck der Fehlmontage bei dem Anwender oder dem Betrachter entsteht. Dies ist für alle beschriebenen komplementären Entsprechungen von Grundformen gültig.

Die komplementären Grundformen 30a und 40a sind unrund, wodurch eine deutliche Verdrehung um die z-Achse verhindert wird. Bevorzugt ist die Form einer Acht (Achterform), also zweier teilweise ineinander liegender Kreise, jede andere Grundform, die durch ineinander stecken der komplementären Partner eine Verdrehung der Platten zueinander um die z-Achse verhindert ist jedoch passend.

Das Zwischenstück 30 kann mit der ersten Platte beispielsweise über eine Verklebung verbunden sein, bevorzugt durch eine doppelseitig klebende Schicht, etwa einer Klebefolie. Auf der zweiten, nicht verklebten Seite des Zwischenstücks 30 ist zumindest eine magnetische Halterung oder zumindest ein magnetisches Befestigungselement 12, 13 angebracht. Bevorzugt sind zwei mit dem Abstand b12 voneinander beabstandete ringförmige Magnete, deren genauer Aufbau später dargestellt wird.

Das Befestigungselement 12, 13 hat die Grundform 12a, 13a, die im Wesentlichen komplementär ist zu der Grundform 22a, 23a der Aussparung 22, 23 der dritten Platte oder des Sockels 5. Das Befestigungselement 12, 13 greift in die Aussparung 22, 23 des Sockels 5.

Dabei ist der Sockel 5 nicht notwendigerweise magnetisch oder magnetisierbar. Eine Kraft wirkt zwischen dem magnetischen Befestigungselement 12, 13 und einer ferromagnetischen Platte oder Plattenstück 3, das rückseitig des Sockels 5 angebracht ist und zwischen einem Untergrund W, etwa einer Wand, einem Türstock oder einer Tür, und dem Sockel 5 liegt. Alle Ränder der Schildelemente 1a, 1b ragen oder stehen in frontaler Ansicht über den Sockel 5 und das Plattenstück 3 heraus.

Der Sockel 5 ist mit dem Untergrund W über das ferromagnetische Plattenstück 3 fest verbunden, beispielsweise durch eine Verschraubung oder vergleichbares, wodurch die Haltevorrichtung 2 gebildet wird. Ebenfalls möglich ist eine Verklebung des Plattenstücks 3 mit dem Sockel 5 und dem Untergrund W, dies ist besonders sinnvoll, wenn der Untergrund, auf den das Schild angebracht werden soll, vergleichsweise eben ausgebildet ist und nicht durch Bohrlöcher angegriffen werden sollen, beispielsweise ein Türstock oder eine Tür. Das Plattenstück 3 hat relativ zu der Dicke d5 des Sockels 5 eine geringere Dicke d3 und das Plattenstück 3 ist bevorzugt so ausgeführt, dass es die Aussparung 22, 23 flächig bedeckt, jedoch nicht die Aussparung 26, 27.

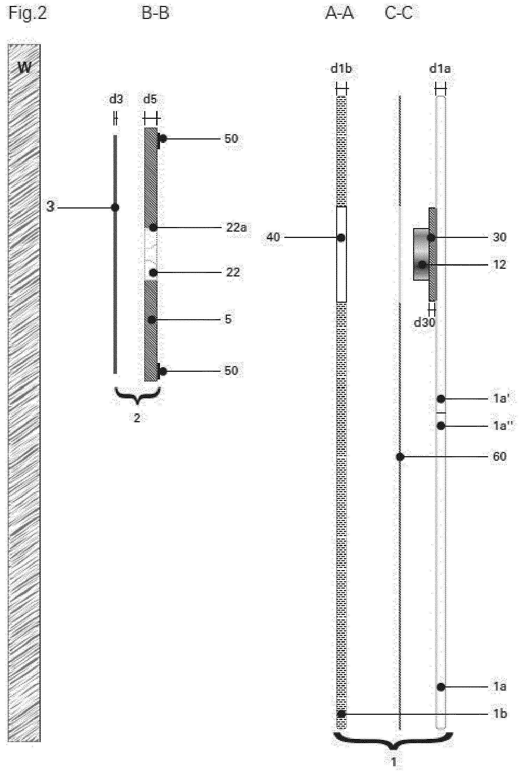

Figur 2 verdeutlicht weiterhin die Funktionsweise des Ausführungsbeispiels aus Figur 1. Zwischen den Platten 1a und 1b kann ein Informationsträger oder beschriftete Zwischenlage 60 eingebracht werden, der beschriftet ist und aus Papier, Pergament oder vergleichbarem bestehen kann, vorzugsweise ist dessen Dicke gegenüber der Dicke d1a, d1b der Platten 1a und 1b um mindestens den Faktor 10 kleiner. Das beschriftete Papier oder Pergament ist bevorzugt halb-lichtdurchlässig, so dass auch bei einem Einlegen des Informationsträgers, und durchsichtigen Platten 1a und 1b, der Untergrund zumindest verschwommen erkennbar ist.

Das Schildelement umfasst die Komponenten 1a und 1b als doppellagiges Schildelement innerhalb dessen der Informationsträger oder die beschriftete Zwischenlage 60 ausgewechselt werden kann, wodurch die Schildplatten 1a und 1b keinen sichtbaren Rahmen an den Rändern aufweisen. Die Haltevorrichtung, umfassend den Sockel 5 und das Plattenstück 3, ist hingegen vorzugsweise nach einmaliger Montage an einem Untergrund W nicht mehr ohne Werkzeug oder andere Hilfsmittel entfernbar oder auswechselbar.

Nach Eingreifen des magnetischen Elements 12, 13 in die Aussparung 22, 23 wirkt eine Kraft zwischen der Haltevorrichtung 2 und dem Schildelement 1, so dass die Schildanordnung in der Vorderansicht frei schwebend wirkt.

Die Summe der Dicken d3 und d5 bestimmen den Abstand in z-Richtung zwischen der zweiten Platte 1b und dem Untergrund W. Dieser Abstand muss ausreichend groß sein, um es einem Anwender zu erlauben mit seinen Händen hinter die zweite Platte 1b, also zwischen den Untergrund W und dem Schildelement 1, zu greifen und das Schildelement 1 ohne Werkzeug oder andere Hilfsmittel von der Haltevorrichtung zu entfernen, indem die magnetisch aufgebrachte Haltekraft durch Muskelkraft überwunden wird. Dabei ist die Haltekraft, die zwischen dem Schildelement und der Haltevorrichtung wirkt, so groß, dass eine sichere Befestigung gewährleistet ist, aber nicht so groß, um von der Muskelkraft eines durchschnittlichen Anwenders nicht mehr entfernbar zu sein. Durch eine vorteilhafte Ausgestaltung kann das Schildelement komplett inklusive des Informationsträgers entfernt werden. In einem zweiten Schritt kann die zweite Platte 1b abgehoben werden, der Informationsträger 60 ausgetauscht werden und die zweite Platte 1b erneut auf den Informationsträger 60 gelegt werden. Das Schildelement 1 mit dem neuen Informationsträger 60 kann nachfolgend einfach, durch Positionierung des Befestigungselements 12, 13 in die Aussparung 22, 23, an der Haltevorrichtung 2 angebracht werden. Dazu entspricht die Dicke d30 des Zwischenstücks 30 in etwa der Dicke d1b der zweiten Platte 1b, jedenfalls ist die Dicke d30 nicht größer als die Dicke d1b.

Auf dem Sockel 5 sind in diesem Ausführungsbeispiel elastische Dämpfungsstücke 50a, 50b, 50c, 50d angebracht, bevorzugt werden in den vier Ecken des Sockels 5 jeweils ein solches Dämpfungsstück angebracht, drei Dämpfer sind jedoch ausreichend. Die Dämpfung 50a, 50b, 50c, 50d kann beispielsweise durch aufgeklebte Silikonscheiben bereitgestellt werden, jedes andere ausreichend elastische Material kann ebenfalls verwendet werden.

Für eine optisch besonders ansprechende Erscheinung des Schildelements 1a kann ein Teilbereich 1a' der ersten Platte opak ausgestaltet sein, bevorzugt nimmt dieser Bereich mehr als 50 % der Plattengesamthöhe, die Höhe der Platten 1a und 1b, ein. Dieser opake Teilbereich verdeckt in frontaler Ansicht optisch das Zwischenstück 30 und die Haltevorrichtung 2. Dabei kann der opake Teilbereich 1a' oben, unten oder mittig an der ersten Platte 1a liegen, je nach dem auf welcher Höhe sich das Zwischenstück 30 und die Haltevorrichtung 2 relativ zu dem Schildelement befindet. Ein verbleibender Teil der ersten Platte 1a" bleibt durchsichtig oder halbdurchsichtig.

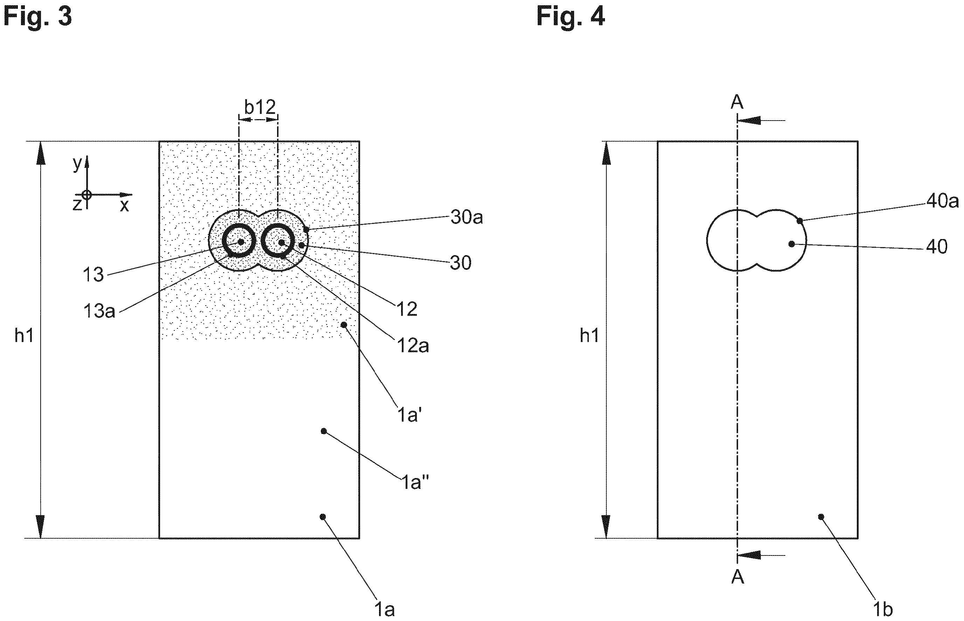

Weiterhin zeigt Figur 3 die Rückseite der ersten Platte 1a, die vorzugsweise aus Glas oder einem anderen durchsichtigen Material besteht. Ein oberer Teil la' ist dabei opak ausgebildet. Vorzugsweise wird die Lichtundurchlässigkeit dadurch erreicht, dass eine opake Klebefolie auf dem oberen Teil la' angebracht ist und zwischen dem Zwischenstück 30, gegebenenfalls mit einer Verklebung, und der ersten Platte 1a angeordnet ist.

Auf der Rückseite des Zwischenstücks 30 ist das magnetische Befestigungselement 12, 13 angeordnet. Bevorzugt ist eine Verschraubung von zumindest einem ringförmigen Magneten, bevorzugt ein Neodym-Magnet, mit dem Zwischenstück 30. Weist der Magnet eine unrunde Grundform auf, so ist ein solcher Magnet ausreichend, wobei auch mehr als ein Magnet mit einer unrunden Grundform verwendet werden kann. Ein Magnet mit unrunder Grundform ist nicht ringförmig ausgebildet, hat jedoch vorzugsweise eine Aussparung, durch die eine Schraube gesteckt werden kann. Bei Anwendung eines ringförmigen Befestigungselements werden zumindest zwei Magnete, bevorzugt Neodym-Magnete, mit dem Zwischenstück 30 verschraubt. Bei der Anwendung von mehr als einem Magneten, sind die Mittelachsen der Magnete um eine Distanz b12 beabstandet. Besonders bevorzugt ist bei Vorliegen einer Achterform der Grundform 30a auf jedem Teilkreis des Zwischenstücks 30 ein Magnet, beispielsweise jeweils im Mittelpunkt, angeordnet.

Während des Einbringens des magnetischen Befestigungselements in die Aussparung 22 kann auf Grund der magnetischen Kraft zu einem Aufeinanderschlagen der Magnetoberfläche mit der magnetisch wirksamen Bodenplatte kommen, wodurch Teile des Magneten beschädigt werden können. Zur Vermeidung einer Beschädigung ist der Magnet in einer weiteren Ausführungsform in einem Teller (nicht in Figur 3 dargestellt) eingebracht, bevorzugt verklebt, der den Magnet radial (bei unrunden Grundformen stirnseitig) und einseitig flächig umgibt. Der Teller weist eine Aussparung auf, die die Aussparung des Magneten verlängert, so dass beispielsweise eine Schraube durch den Magneten und Teller gesteckt werden kann. Die axiale Höhe des Tellers ist größer oder zumindest gleich groß wie die axiale Höhe des Magnets. Dadurch wird ein etwaiger Schlag bei der Zusammenführung des Schildelements 1 und der Haltevorrichtung 2 auf den Teller übertragen und die empfindlichere Oberfläche eines magnetischen Elements ist vor Beschädigungen geschützt gelagert.

Figur 4 zeigt eine zweite Platte 1b. Diese besteht vorzugsweise aus Glas oder einem vergleichbaren lichtdurchlässigen Material wie etwa PMMA. Die Aussparung 40 weist die Grundform 40a auf, die komplementär ist zu der Grundform 30a.

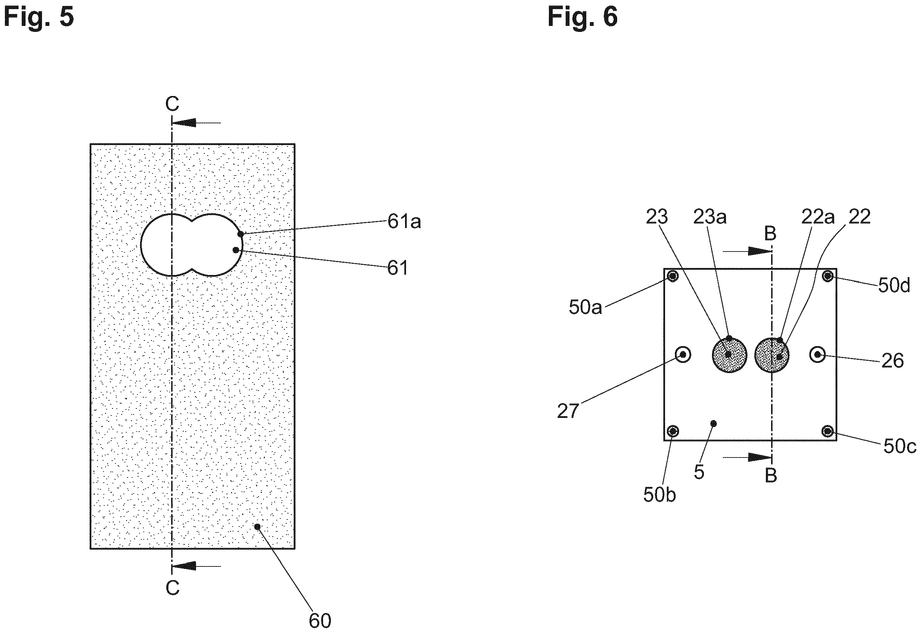

In Figur 5 ist ein Informationsträger 60 dargestellt. Der Informationsträger kann aus Papier, Pergament oder aus einem ähnlichen beschriftbaren Material bestehen und weist eine Aussparung 61 auf, die in ihrer Grundform 61a der Grundform 30a entspricht. Die Grundform 30a bildet für den Informationsträger 60 einen innenliegenden Rahmen, wodurch eine genaue Positionierung des Informationsträgers 60 erreicht wird. Die Aufschrift www.xylo-wolf.de ist dabei beispielhaft auf der Oberfläche des Informationsträgers 60 aufgebracht.

Die dritte Platte oder Sockel 5 in Figur 6 weist zumindest eine Aussparung 22, 23 auf, in die das magnetische Element 12, 13 eigebracht werden kann. Die Grundform 22a, 23a entspricht im Wesentlichen der Grundform 12a, 13a. Bevorzugt sind zwei um die Distanz b12 voneinander beabstandete Aussparungen. Zumindest eine weitere Aussparung 26, 27 ist vorgesehen und kann zur Montage der Platte 5 an einem festen Untergrund W verwendet werden, indem etwa eine Schraube durch die Aussparung 26, 27 greift und mit dem Untergrund W verschraubt wird. Bevorzugt sind zumindest zwei Aussparungen 26, 27. Zusätzlich sind bevorzugte vier Dämpfungsstücke 50a, 50b, 50c, 50d in den vier Ecken der Sockelfläche dargestellt.

## Patentansprüche

1. **Schildanordnung** mit einem Schildelement (1), das eine x-y-Ebene aufspannt, und einer Haltevorrichtung (2), wobei
(a) das Schildelement (1) eine erste Platte (1a) und eine zweite Platte (1b) umfasst;
(b) die erste Platte (1a) zumindest ein magnetisches Befestigungselement (12, 13) mit einer ersten Grundform (12a, 13a) umfasst, das über ein Zwischenstück (30), welches eine zweite Grundform (30a) aufweist, mit der ersten Platte (1a) unverschieblich verbunden ist, so dass das Zwischenstück (30) flächig zwischen dem zumindest einen magnetischen Befestigungselement (12, 13) und der ersten Platte (1a) liegt;
(c) die zweite Platte (1b) eine zu der x-y-Ebene senkrechte Aussparung (40) mit einer dritten Grundform (40a) aufweist, wobei die dritte Grundform (40a) im Wesentlichen der zweiten Grundform (30a) entspricht, und die erste und zweite Platte (1a, 1b) flächig, das Zwischenstück (30) in die Aussparung (40) greifend, aneinander liegen;
(d) die Haltevorrichtung (2) eine dritte Platte (5) und ein ferromagnetisches Plattenstück (3) umfasst;
(e) die dritte Platte (5) senkrecht zu der x-y-Ebene zumindest eine Aussparung (22, 23) mit einer vierten Grundform (22a) aufweist, wobei die vierte Grundform (22a) im Wesentlichen der ersten Grundform (12a, 13a) entspricht, und die dritte Platte (5) flächig an dem ferromagnetischen Plattenstück (3) gehalten ist;
(f) das zumindest eine magnetische Befestigungselement (12, 13) in die zumindest eine Aussparung (22, 23) greift,
(g) um eine Kraft zwischen dem zumindest einen magnetischen Befestigungselement (12, 13) und dem ferromagnetischen Plattenstück (3) zu erzeugen und das Schildelement (1) mit der Haltevorrichtung (2) abnehmbar zu verbinden.

2. Schildanordnung nach Anspruch 1, wobei zwischen der ersten Platte (1a) und der zweiten Platte (1b) ein Informationsträger (60) liegt, der zwischen den Platten (1a, 1b) eingespannt wird, wobei der Informationsträger (60) bevorzugt senkrecht zur x-y-Ebene eine Aussparung (61) mit einer fünften Grundform (61a) aufweist und die fünfte Grundform (61a) im Wesentlichen der zweiten Grundform (30a) entspricht.

3. Schildanordnung nach einem der Ansprüche 1 bis 2, wobei die erste Platte (1a) und die zweite Platte (1b) rahmenlos verbunden sind und über die zweite und dritte Grundform (30a, 40a) unverdrehbar zueinander festgelegt sind.

4. Schildanordnung nach einem der Ansprüche 1 bis 3, wobei das zumindest eine magnetische Befestigungselement (12, 13) einen unrunden Permanentmagneten oder zumindest zwei kreisförmige Permanentmagnete umfasst, die beabstandet sind (b12).

5. Schildanordnung nach einem der Ansprüche 1 bis 4, wobei die zweite Grundform (30a) unrund ist, insbesondere dass die zweite Grundform (30a) rechteckig, polygonisch oder elliptisch ist oder zwei zusammenliegenden Kreisen entspricht (Achterform).

6. Schildanordnung nach einem der Ansprüche 1 bis 5, wobei die erste Platte (1a) aus einem zumindest teilweise durchsichtigen Material besteht, insbesondere Glas, und/oder die zweite Platte (1b) aus einem durchsichtigen Material besteht, insbesondere Glas, wobei bevorzugt ein oberer Abschnitt (1a') der ersten Platte (1a) opak und ein unterer Abschnitt (1a") der ersten Platte (1a) durchsichtig ausgebildet ist.

7. Schildanordnung nach einem der vorherigen Ansprüche, wobei die vordere Platte (1a) des doppellagigen Schildelements aus zwei Lagen oder zwei ebenen Glasplatten besteht, insbesondere ein oberer Abschnitt (1a') opak ist und ein unterer Abschnitt (1a") lichtdurchlässig ist.

8. Schildanordnung nach einem der vorherigen Ansprüche, wobei ein unterer Abschnitt (1a") der vorderen Platte (1a) des Schildelements mehr als 50 % einer Höhe (h1) der gesamten vorderen Platte des Schildelements aufweist und der übrige Abschnitt (1a') opak ist sowie beide Abschnitte ohne von vorne sichtbare Montagestellen oder Montageöffnungen ausgebildet sind, insbesondere glaseben ausgeführt sind.

9. Schildanordnung nach einem der vorherigen Ansprüche, wobei die unrunde, erhabene Formfläche (30) nach Art einer liegenden Acht oder einer senkrecht stehenden Acht ausgebildet ist und auf den ausgewölbten Abschnitten der Acht je ein Magnetträger (12, 13) angeordnet ist.

10. Schildanordnung nach einem der vorherigen Ansprüche, wobei auf der Oberfläche des Sockels (2) zumindest drei, bevorzugt vier elastisch nachgiebige Dämpfungsstücke (50a, 50b, 50c, 50d) angeordnet sind, auf der das doppellagige Schildelement (1) im montierten Zustand aufliegt.

11. Schildanordnung nach einem der vorherigen Ansprüche, wobei zwischen den Schildplatten (1a, 1b), zumindest im unteren Abschnitt (1a") außerhalb des Montagesockels (2) eine beschriftete Zwischenlage (60), insbesondere aus Papier oder Pergament oder durchscheinendem Werkstoff, liegt, die von beiden Schildplatten flachseitig aufgenommen ist, insbesondere dazwischen eingepresst ist.

12. Schildanordnung nach einem der vorherigen Ansprüche, welche keinen sichtbaren Rahmen am Rand des doppellagigen Schildelements (1; 1a, 1b) aufweist.

## Claims

1. **Sign assembly** comprising a sign element (1) that defines an x-y plane, and a holding device (2), wherein
(a) the sign element (1) comprises a first plate (1a) and a second plate (1b);
(b) the first plate (1a) comprises at least one magnetic fastening element (12, 13) having a first basic shape (12a, 13a) and being non-displaceably connected to the first plate (1a) via an intermediate piece (30) having a second basic shape (30a), so that the intermediate piece (30) lies in a planar fashion between the at least one magnetic fastening element (12, 13) and the first plate (1a);
(c) the second plate (1b) includes an opening (40) having a third basic shape (40a) and extending perpendicularly to the x-y plane, the third basic shape (40a) corresponding substantially to the second basic shape (30a), and the first plate and second plate (1a, 1b) being in planar contact with one another, with the intermediate piece (30) extending into the opening (40);
(d) the holding device (2) comprises a third plate (5) and a ferromagnetic plate piece (3);
(e) the third plate (5) includes at least one opening (22, 23) having a fourth basic shape (22a) and extending perpendicularly to the x-y plane, the fourth basic shape (22a) corresponding substantially to the first basic shape (12a, 13a), and the third plate (5) being held on the ferromagnetic plate piece (3) in a planar fashion;
(f) the at least one magnetic fastening element (12, 13) extends into the at least one opening (22, 23),
(g) so as to create a force between the at least one magnetic fastening element (12, 13) and the ferromagnetic plate piece (3) and detachably connect the sign element (1) with the holding device (2).

2. Sign assembly according to claim 1, wherein the first plate (1a) and the second plate (1b) have positioned between them an information carrier (60) that is fixed between the plates (1a, 1b), the information carrier (60) including, preferably perpendicularly to the x-y plane, an opening (61) having a fifth basic shape (61a), and the fifth basic shape (61a) corresponding substantially to the second basic shape (30a).

3. Sign assembly according to one of the claims 1 or 2, wherein the first plate (1a) and the second plate (1b) are framelessly connected and are fixed in position via the second and third basic shapes (30a, 40a) such that they are secured against rotation relative to one another.

4. Sign assembly according to one of the claims 1 to 3, wherein the at least one magnetic fastening element (12, 13) comprises a non-circular permanent magnet or at least two circular permanent magnets that are spaced apart (b12).

5. Sign assembly according to one of the claims 1 to 4, wherein the second basic shape (30a) is non-circular, and wherein the second basic shape (30a) is, in particular, rectangular, polygonal or elliptical or corresponds to two abutting circles (figure-of-eight shape).

6. Sign assembly according to one of the claims 1 to 5, wherein the first plate (1a) consists of an at least partially transparent material, in particular glass, and/or the second plate (1b) consists of a transparent material, in particular glass, an upper portion (1a') of the first plate (1a) being preferably opaque and a lower portion (1a") of the first plate (1a) being preferably transparent.

7. Sign assembly according to one of the preceding claims, wherein the front plate (1a) of the double-layer sign element consists of two layers or of two flat glass plates, and wherein, in particular, an upper portion (1a') is opaque and a lower portion (1a") is translucent.

8. Sign assembly according to one of the preceding claims, wherein a lower portion (1a") of the front plate (1a) of the sign element occupies more than 50% of a height (h1) of the entire front plate of the sign element and the residual portion (1a') is opaque, and wherein both portions are configured without any mounting points or mounting openings that are visible from the front, in particular in a glass-planar fashion.

9. Sign assembly according to one of the preceding claims, wherein the non-circular, raised shaped area (30) is configured after the fashion of a horizontal figure eight or a vertical, upright figure eight, and wherein the rounded portions of the figure eight have arranged thereon a respective magnetic carrier (12, 13).

10. Sign assembly according to one of the preceding claims, wherein the surface of the base (2) has arranged thereon at least three, preferably four elastically resilient damping pieces (50a, 50b, 50c, 50d) on which the double-layer sign element (1) rests in the mounted condition.

11. Sign assembly according to one of the preceding claims, wherein a lettered intermediate layer (60), in particular made from paper or parchment or a translucent material, is positioned between the sign plates (1a, 1b), at least in the lower portion (1a") outside the mounting base (2), the intermediate layer being accommodated by the flat sides of the two sign plates, in particular press-fitted therebetween.

12. Sign assembly according to one of the preceding claims, the sign assembly having no visible frame on the edge of the double-layer sign element (1; 1a, 1b).

## Revendications

1. Dispositif d'écran avec un élément d'écran (1), qui définit un plan x-y, et un dispositif de maintien (2), dans lequel
(a) l'élément d'écran (1) comprend une première plaque (1a) et une deuxième plaque (1b),
(b) la première plaque (1a) comprend au moins un élément de fixation magnétique (12, 13) avec une première forme de base (12a, 13a), qui est relié de façon immobile à la première plaque (1a) au moyen d'une pièce intermédiaire (30) qui présente une deuxième forme de base (30a), de telle manière que la pièce intermédiaire (30) soit placée à plat entre ledit au moins un élément de fixation magnétique (12, 13) et la première plaque (la);
(c) la deuxième plaque (1b) présente une découpe (40) perpendiculaire au plan x-y avec une troisième forme de base (40a), dans lequel la troisième forme de base (40a) correspond essentiellement à la deuxième forme de base (30a), et la première plaque et la deuxième plaque (1a, 1b) sont placées à plat l'une contre l'autre, en serrant la pièce intermédiaire (30) dans la découpe (40);
(d) le dispositif de maintien (2) comprend une troisième plaque (5) et une pièce plate ferromagnétique (3);
(e) la troisième plaque (5) présente perpendiculairement au plan x-y au moins une découpe (22, 23) avec une quatrième forme de base (22a), dans lequel la quatrième forme de base (22a) correspond essentiellement à la première forme de base (12a, 13a), et la troisième plaque (5) est maintenue à plat sur la pièce plate ferromagnétique (3);
(f) ledit au moins un élément de fixation magnétique (12, 13) s'engage dans ladite au moins une découpe (22, 23),
(g) afin de produire une force entre ledit au moins un élément de fixation magnétique (12, 13) et la pièce plate ferromagnétique (3) et de relier de façon amovible l'élément d'écran (1) au dispositif de maintien (2).

2. Dispositif d'écran selon la revendication 1, dans lequel il se trouve entre la première plaque (1a) et la deuxième plaque (1b) un support d'informations (60), qui est encastré entre les plaques (1a, 1b), dans lequel le support d'informations (60) présente de préférence perpendiculairement au plan x-y une découpe (61) avec une cinquième forme de base (61a) et la cinquième forme de base (61a) correspond essentiellement à la deuxième forme de base (30a).

3. Dispositif d'écran selon une des revendications 1 à 2, dans lequel la première plaque (1a) et la deuxième plaque (1b) sont assemblées sans cadre et sont immobilisées sans rotation l'une par rapport à l'autre au moyen de la deuxième et de la troisième formes de base (30a, 40a).

4. Dispositif d'écran selon l'une quelconque des revendications 1 à 3, dans lequel ledit au moins un élément de fixation magnétique (12, 13) comprend un aimant permanent non rond ou au moins deux aimants permanents circulaires, qui sont espacés l'un de l'autre (b12).

5. Dispositif d'écran selon l'une quelconque des revendications 1 à 4, dans lequel la deuxième forme de base (30a) n'est pas ronde, en particulier en ce que la deuxième forme de base (30a) est rectangulaire, polygonale ou elliptique ou correspond à deux cercles réunis (forme de huit).

6. Dispositif d'écran selon l'une quelconque des revendications 1 à 5, dans lequel la première plaque (1a) se compose d'un matériau au moins partiellement transparent, en particulier de verre, et/ou la deuxième plaque (1b) se compose d'un matériau transparent, en particulier de verre, dans lequel de préférence une partie supérieure (1a') de la première plaque (1a) est opaque et une partie inférieure (1a") de la première plaque (1a) est transparente.

7. Dispositif d'écran selon l'une quelconque des revendications précédentes, dans lequel la plaque antérieure (1a) de l'élément d'écran à double couche se compose de deux couches ou de deux plaques de verre planes, en particulier une partie supérieure (1a') est opaque et une partie inférieure (1a") est translucide.

8. Dispositif d'écran selon l'une quelconque des revendications précédentes, dans lequel une partie inférieure (1a") de la plaque antérieure (1a) de l'élément d'écran présente plus de 50 % d'une hauteur (h1) de la plaque antérieure totale de l'élément d'écran et la partie restante (1a') est opaque et les deux parties sont réalisées sans points de montage ou ouvertures de montage visibles par l'avant, en particulier sont un plan de verre.

9. Dispositif d'écran selon l'une quelconque des revendications précédentes, dans lequel la face de forme non ronde surélevée (30) est configurée à la manière d'un huit couché ou d'un huit dressé et un support magnétique (12, 13) est disposé respectivement sur les parties courbes du huit.

10. Dispositif d'écran selon l'une quelconque des revendications précédentes, dans lequel au moins trois, de préférence quatre pièces d'amortissement déformables élastiquement (50a, 50b, 50c, 50d) sont disposées sur la surface du socle (2), sur laquelle l'élément d'écran à double couche (1) repose dans l'état monté.

11. Dispositif d'écran selon l'une quelconque des revendications précédentes, dans lequel il se trouve entre les plaques d'écran (1a, 1b), au moins dans la partie inférieure (1a") à l'extérieur du socle de montage (2), une couche intermédiaire imprimée (60), en particulier en papier ou en parchemin ou en matériau translucide, qui est retenue à plat par les deux plaques d'écran, en particulier est serrée entre celles-ci.

12. Dispositif d'écran selon l'une quelconque des revendications précédentes, qui ne présente pas de cadre visible au bord de l'élément d'écran à double couche (1; 1a, 1b).
